# EUROPÄISCHE PATENTANMELDUNG

(11) **EP 3 313 148 A1**
(43) Veröffentlichungstag der Anmeldung: **25.04.2018**
(21) Anmeldenummer: 17197361.3
(22) Anmeldetag: 19.10.2017
(51) Int. Cl.: H05B 33/08

(54) **SCHALTUNGSANORDNUNG EINER BELEUCHTUNGSEINRICHTUNG EINES KFZ SOWIE SIGNALWANDLER UND VERFAHREN ZUR ANSTEUERUNG EINES SCHALTELEMENTS**

(30) Priorität: 21.10.2016 DE 102016120100
(71) Anmelder: Automotive Lighting Reutlingen GmbH, 72762 Reutlingen (DE)
(72) Erfinder: Bez, Benedikt, 72070 Tübingen (DE); Heyer, Mathias, 72072 Tübingen (DE)
(74) Vertreter: Kohler Schmid Möbus Patentanwälte

(57) **Zusammenfassung**

Die Erfindung betrifft eine Schaltungsanordnung (1) einer Beleuchtungseinrichtung, vorzugsweise eines KFZ, mit wenigstens zwei in Reihe geschalteten Halbleiterlichtquellen (D₁, D₂), wobei wenigstens eine erste Halbleiterlichtquelle (D₁, D₂) durch eine zur ersten Halbleiterlichtquelle (D₁, D₂) parallel geschaltete Bypass-Schaltung (BP₁, BP₂) mit einem mittels eines Bypass-Steuersignals (S₁, S₂) steuerbaren Schaltelement (Q₁, Q₂) überbrückbar ist und wobei die erste Halbleiterlichtquelle (D₁, D₂) bei durchgeschaltetem Schaltelement (Q₁, Q₂) überbrückt ist. Erfindungsgemäß ist ein Signalwandler (SW₁, SW₂) vorgesehen, der ein Ansteuersignal (A₁, A₂) in das Bypass-Steuersignal (S₁, S₂) umwandelt, wobei der Signalwandler (SW₁, SW₂) wenigstens ein Flankeneinstellmittel (F₁) zur Einstellung der Flankensteilheit einer Flanke (FL₁) des Bypass-Steuersignals (S₁, S₂) aufweist.

## Beschreibung

Die Erfindung geht aus von einer Schaltungsanordnung einer Beleuchtungseinrichtung, vorzugsweise eines KFZ, mit wenigstens zwei in Reihe geschalteten Halbleiterlichtquellen, wobei wenigstens eine erste Halbleiterlichtquelle durch eine zur ersten Halbleiterlichtquelle parallel geschaltete Bypass-Schaltung mit einem mittels eines Bypass-Steuersignals steuerbaren Schaltelement überbrückbar ist, wobei die erste Halbleiterlichtquelle bei durchgeschaltetem Schaltelement überbrückt ist.

Eine solche Schaltungsanordnung kommt beispielsweise bei Beleuchtungssystemen für Kraftfahrzeuge zum Einsatz.

Beispielsweise ist aus der DE 10 2006 031 679 A1 eine gattungsgemäße Schaltungsanordnung zur elektrischen Ansteuerung eines Kraftfahrzeugscheinwerfers bekannt.

In dieser Druckschrift wird eine Schaltungsanordnung beschrieben, bei der in einem Leistungskreis in Reihe geschaltete Halbleiterlichtquellen, insbesondere Leuchtdioden, einzeln ansteuerbar sind. Dazu ist jede der Halbleiterlichtquellen mittels einer Bypass-Schaltung überbrückbar. Jede Bypass-Schaltung weist hierfür ein Schaltelement, insbesondere einen Feldeffekttransistor, auf. Schaltet das Schaltelement durch, so wird die jeweilige Halbleiterlichtquelle überbrückt und somit ausgeschaltet. Umgekehrt leuchtet die jeweilige Halbleiterlichtquelle, wenn das Schaltelement sperrt. Somit kann jede der Halbleiterlichtquellen trotz Reihenschaltung einzeln angesteuert werden. Zur Ansteuerung werden Steuersignale, insbesondere pulsweitenmodulierte Steuersignale, durch eine Steuereinheit bzw. einen Mikroprozessor erzeugt, mittels derer die Schaltelemente angesteuert werden. Der Leistungskreis dieser Schaltungsanordnung wird durch eine Konstantstromquelle versorgt.

Wenn die Konstantstromquelle als Tiefsetzsteller mit Glättungskondensator ausgebildet ist, kann es erfahrungsgemäß durch die Ein-/Ausschalt- bzw. Umschaltvorgänge der Schaltelemente bzw. Feldeffekttransistoren zu unerwünschten Stromspitzen im Leistungskreis kommen.

Unter Umschaltvorgang wird dabei eine Zustandsänderung eines Schaltelements vom eingeschalteten bzw. durchgeschalteten Zustand in den ausgeschalteten bzw. gesperrten Zustand oder umgekehrt verstanden.

Die jeweils nicht überbrückten Halbleiterlichtquellen können somit einem erhöhten Zerstörungsrisiko ausgesetzt sein. Zudem sollte aus Gründen der elektromagnetischen Verträglichkeit die Welligkeit des Stroms im Leistungskreis ein vordefiniertes Maß nicht überschreiten.

Aufgabe der Erfindung ist es daher, eine Schaltungsanordnung, einen Signalwandler sowie ein Verfahren zur verbesserten Einzel-Ansteuerung in Reihe geschalteter Halbleiterlichtquellen anzubieten.

Gelöst wird die Aufgabe durch eine Schaltungsanordnung einer Beleuchtungseinrichtung, vorzugsweise eines KFZ, mit wenigstens zwei in Reihe geschalteten Halbleiterlichtquellen, wobei wenigstens eine erste Halbleiterlichtquelle durch eine zur ersten Halbleiterlichtquelle parallel geschaltete Bypass-Schaltung mit einem mittels eines Bypass-Steuersignals steuerbaren Schaltelement überbrückbar ist, wobei die erste Halbleiterlichtquelle bei durchgeschaltetem Schaltelement überbrückt ist, und wobei ein Signalwandler vorgesehen ist, der ein Ansteuersignal in das Bypass-Steuersignal umwandelt, wobei der Signalwandler wenigstens ein Flankeneinstellmittel zur Einstellung der Flankensteilheit einer Flanke des Bypass-Steuersignals aufweist.

Untersuchungen haben gezeigt, dass während eines Umschaltvorgangs ein Spitzenstrom durch den Leistungskreis, insbesondere durch die nicht überbrückten, in Reihe geschalteten Halbleiterlichtquellen fließt, der umgekehrt proportional zur Umschaltdauer des Schaltelements ist. Gemäß dem Gedanken der Erfindung kann mittels des Flankeneinstellmittels die Flankensteilheit einer Flanke des Bypass-Steuersignals eingestellt, insbesondere reduziert, werden. Insbesondere kann die Flankendauer einer Einschalt- bzw. einer Ausschalt-Flanke zeitlich ausgedehnt werden, sodass das steuerbare Schaltelement langsamer zwischen dem Ausgangs- und dem Endzustand umschaltet. Dadurch können Stromspitzen reduziert bzw. sogar vermieden werden. Die Welligkeit des durch die Halbleiterlichtquellen fließenden Stroms wird reduziert. Die elektromagnetische Verträglichkeit wird verbessert. Auch kann auf zusätzliche Leistungsbauteile im Leistungskreis, wie sie beispielsweise bei einem (gegebenenfalls zusätzlichen) Strombegrenzer erforderlich wären, verzichtet werden.

Unter Flankensteilheit wird dabei die maximale Anstiegs-/Abfall-Geschwindigkeit eines Signals als Prozent der Differenz des maximalen Signalpegels zum minimalen Signalpegel je Zeiteinheit verstanden.

Die Schaltungsanordnung kann beispielsweise in einem Matrix-Scheinwerfer oder einer Matrix-Rückleuchte und dergleichen zum Einsatz kommen. Die Schaltungsanordnung kann insbesondere in einem Kraftfahrzeug, wie beispielsweise einem PKW oder einem LKW, als auch in anderen Fahrzeugen, wie beispielsweise Fahrrädern oder Anhängern, angeordnet werden.

Die Halbleiterlichtquellen können beispielsweise als Leuchtdioden, insbesondere als organische Leuchtdioden, gebildet sein oder ein oder mehrere solcher aufweisen.

Das Schaltelement kann vorzugsweise eingerichtet sein, von einem gesperrten Zustand, vorzugsweise kontinuierlich, über einen teilweise leitenden Zustand in einen vollständig leitenden Zustand bzw. umgekehrt vom vollständig leitenden Zustand in den gesperrten Zustand zu wechseln.

Beispielsweise kann das Schaltelement ein Halbleiterschaltelement, insbesondere ein Transistor, sein. Insbesondere kann das Schaltelement als Feldeffekttransistor, beispielsweise als MOS-FET, als Bipolar-Transistor, beispielsweise als npn-Transistor oder pnp-Transistor, ausgebildet sein oder einen oder mehrere davon aufweisen.

Ein solches Schaltelement ermöglicht es, kontinuierlich beispielsweise von einem gesperrten Zustand stufenlos in einen leitenden Zustand, d. h. von einem Aus-Zustand in einen Ein-Zustand, umzuschalten. Dadurch ist es besonders einfach möglich, die Umschaltdauer einzustellen, da es ausreicht, die Flankensteilheit eines an einen Steuereingang des Schaltelements angelegten Bypass-Steuersignals hinreichend gering zu wählen.

Besonders vorteilhaft ist es, wenn das Flankeneinstellmittel ein RC-Glied, d. h. eine Schaltung, insbesondere eine Parallelschaltung, eines elektrischen Widerstandes und eines Kondensators, umfasst. Das Flankeneinstellmittel kann auch ein RL-Glied, d. h. einen Widerstand und eine Induktivität, umfassen. Beispielsweise kann das Flankeneinstellmittel einen Tiefpass umfassen. Somit kann auf einfache Weise die Flankensteilheit des Bypass-Steuersignals eingestellt werden, indem beispielsweise die Zeitkonstante des RC-Gliedes, d. h. das Produkt aus Widerstandswert und Kapazität, entsprechend der gewünschten Flankensteilheit bzw. der gewünschten Umschaltdauer gewählt wird.

Dabei ist es besonders bevorzugt, wenn die Zeitkonstante des RC-Glieds mindestens 1 µs beträgt. Beispielsweise kann der Widerstandswert mit 3,3 kΩ und der Kapazitätswert mit 22 nF, entsprechend einer Zeitkonstante von ca. 73 µs, gewählt werden. Insbesondere kann die Zeitkonstante des RC-Glieds derart gewählt werden, dass der Umschaltvorgang des Schaltelements mindestens eine vordefinierte Mindestdauer, beispielsweise 1 µs, dauert. Je größer die Zeitkonstante ist, desto geringer ist die Stromspitze.

Auch kann der Signalwandler einen Pegelumsetzer, vorzugsweise zur Verschiebung des Ansteuersignals, aufweisen. Der Pegelumsetzer kann sicherstellen, dass die Pegel des Bypass-Steuersignals zur Steuerung des Schaltelements ein vollständiges Umschalten, beispielsweise von einem Aus- zu einem Ein-Zustand, ermöglichen. Somit kann insbesondere sichergestellt werden, dass das Schaltelement dem Ansteuersignal entsprechend geschaltet wird.

Dazu kann der Pegelumsetzer wenigstens ein aktives Halbleiterbauelement aufweisen. Das aktive Halbleiterbauelement kann beispielsweise ein Halbleiterschaltelement, insbesondere einen Transistor, oder eine Transistorschaltung, beispielsweise einen Operationsverstärker, aufweisen. Der Pegelumsetzer kann insbesondere wenigstens zwei Halbleiterschaltelemente und wenigstens einen Widerstand aufweisen.

Besonders bevorzugt ist es, wenn die in Reihe geschalteten Halbleiterlichtquellen durch einen DC-DC-Wandler gespeist sind. In einer besonders bevorzugten Ausführungsform der Erfindung kann der DC-DC-Wandler als Tiefsetzsteller ausgebildet sein. Dadurch können mit hohem Wirkungsgrad die zum Betrieb der Halbleiterlichtquellen notwendigen Stromstärken auf einfache Weise bereitgestellt werden.

Dem Tiefsetzsteller kann ein Hochsetzsteller zunächst vorgeschaltet sein. Somit kann zwischen Hochsetzsteller und Tiefsetzsteller eine Zwischenkreisspannung bereitgestellt bzw. abgegriffen werden, mit der weitere Elemente der Schaltungsanordnung betrieben werden können. Die Zwischenkreisspannung kann insbesondere gewonnen werden, indem die Netzspannung, beispielsweise in einem Kraftfahrzeug 12 V, durch den Hochsetzsteller auf die gewünschte Zwischenkreisspannung erhöht wird.

Besonders vorteilhaft ist es, wenn der Signalwandler an eine Zwischenkreisspannung angeschlossen ist und/oder der Signalwandler eine Ladungspumpe aufweist. Es kann vorteilhaft sein, das steuerbare Schaltelement über das Bypass-Steuersignal mit höheren Pegeln anzusteuern als beispielsweise im Leistungskreis zur Verfügung stehen. Dies kann ermöglicht werden, indem der Signalwandler mit einer entsprechend höheren Versorgungsspannung versorgt wird. Diese höhere Versorgungsspannung kann dazu beispielsweise aus der Zwischenkreisspannung gewonnen werden. Alternativ kann auch der Signalwandler eine Ladungspumpe aufweisen, mit der die Versorgungsspannung, mit der dieser betrieben wird, auf ein höheres Potential angehoben werden kann. Dazu kann die Ladungspumpe als Hochsetzsteller gebildet sein.

In den Rahmen der Erfindung fällt des Weiteren ein Signalwandler zur Ansteuerung eines steuerbaren Schaltelements einer parallel zu einer Halbleiterlichtquelle geschalteten Bypass-Schaltung über ein Bypass-Steuersignal, wobei der Signalwandler wenigstens ein Flankeneinstellmittel, vorzugsweise ein RC-Glied umfassend, zur Einstellung der Flankensteilheit des Bypass-Steuersignals aufweist.

Ein solcher Signalwandler kann in einer erfindungsgemäßen Schaltungsanordnung einer Beleuchtungseinrichtung vorgesehen werden. Er kann auch in Schaltungsanordnungen einer Beleuchtungseinrichtung wie beispielsweise der Schaltungsanordnung der eingangs erwähnten Druckschrift DE 10 2006 031 679 A1 integriert bzw. verwendet werden.

Der Signalwandler kann, beispielsweise in einem KFZ, räumlich separat, beispielsweise in Form eines Moduls, von den in Reihe geschalteten Halbleiterlichtquellen, insbesondere Hochleistungsdioden, eines Scheinwerfers oder einer Rückleuchte, und/oder den ihnen zugeordneten Bypass-Schaltungen angeordnet werden. Beispielsweise kann somit der Signalwandler in einem Leistungsversorgungsmodul angeordnet sein. Davon getrennt können die Halbleiterlichtquellen in dem Scheinwerfer oder der Rückleuchte angeordnet sein.

Auch fällt in den Rahmen der Erfindung ein Verfahren zur Ansteuerung eines steuerbaren Schaltelements einer Bypass-Schaltung zur Überbrückung einer Halbleiterlichtquelle, vorzugsweise einer Beleuchtungseinrichtung eines KFZ, wobei das steuerbare Schaltelement über einen vorgegebenen Mindestzeitraum geschaltet wird.

Insbesondere kann dazu eine Flankensteilheit, beispielsweise durch ein Flankeneinstellmittel, eines das Schaltelement steuernden Bypass-Steuersignals reduziert werden. Somit kann die Umschaltdauer des Schaltelements verlängert werden, wodurch Stromspitzen reduziert bzw. vermieden werden können und im Leistungskreis die Welligkeit des Stroms reduziert wird.

Besonders bevorzugt kann dabei das Verfahren bei einer Reihenschaltung mehrerer, durch Bypass-Schaltungen überbrückbarer, Halbleiterlichtquellen verwendet werden.

Weitere Merkmale und Vorteile der Erfindung ergeben sich aus der nachfolgenden detaillierten Beschreibung von Ausführungsbeispielen der erfindungsgemäßen Schaltungsanordnung bzw. des erfindungsgemäßen Signalwandlers sowie von Varianten des erfindungsgemäßen Verfahrens, anhand der Figuren der Zeichnungen, die erfindungswesentliche Einzelheiten zeigt, sowie aus den Ansprüchen.

Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Varianten und Ausführungsbeispiele der Erfindung dargestellt und werden in der nachfolgenden Beschreibung näher erläutert.

Es zeigen:
- Fig. 1a: eine Schaltungsanordnung gemäß der Erfindung;
- Fig. 1b: einen Ausschnitt der Schaltungsanordnung der Fig. 1a mit einem Tiefsetzsteller;
- Fig. 2: einen Ausschnitt eines Signalverlaufs eines Bypass-Steuersignals bei einer Schaltungsanordnung gemäß der Erfindung.

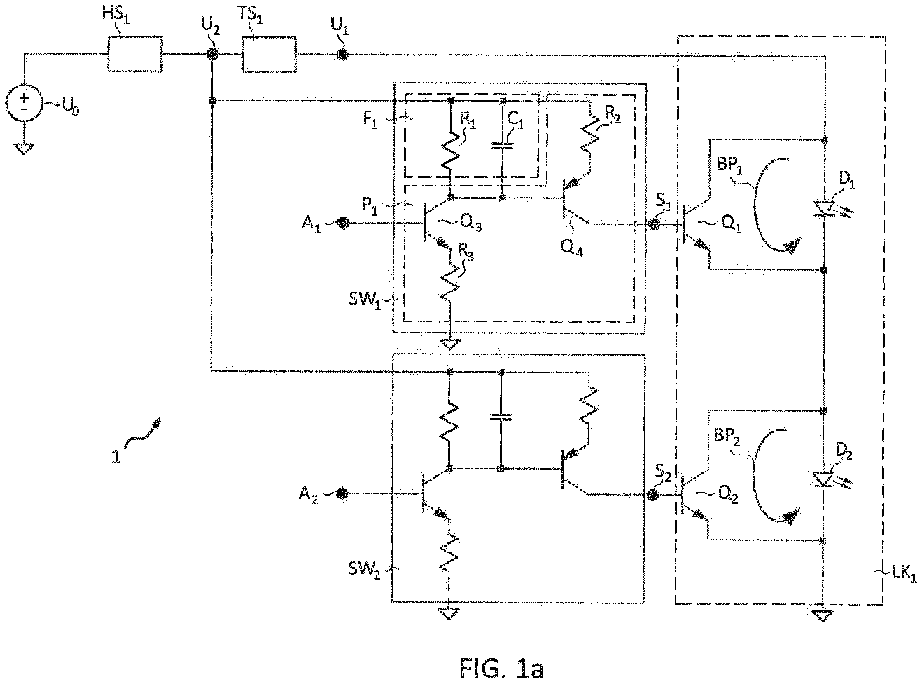

Die Fig. 1a zeigt ein Ausführungsbeispiel einer erfindungsgemäßen Schaltungsanordnung 1 einer Beleuchtungseinrichtung eines KFZ.

Zu erkennen ist ein Leistungskreis LK₁ mit zwei in Reihe geschalteten Halbleiterlichtquellen D₁, D₂, die hier als Leuchtdioden ausgebildet sind. Die Halbleiterlichtquellen D₁, D₂ sind jeweils durch Bypass-Schaltungen BP₁, BP₂ mit steuerbaren Schaltelementen Q₁, Q₂ überbrückbar. Die steuerbaren Schaltelemente Q₁, Q₂ sind in diesem Fall als npn-Bipolar-Transistoren ausgebildet, können aber dem erfindungsgemäßen Gedanken entsprechend in anderen Ausführungsbeispielen auch beispielsweise als MOS-FET gewählt werden. Schaltet eines der Schaltelemente Q₁ bzw. Q₂ durch, so erlischt die zugehörige Halbleiterlichtquelle D₁ bzw. D₂, wohingegen die zugehörige Halbleiterlichtquelle D₁ bzw. D₂ leuchtet, sobald das zugehörige Schaltelement Q₁ bzw. Q₂ sperrt. Trotz Reihenschaltung der Halbleiterlichtquellen D₁, D₂ können diese somit einzeln ein- bzw. ausgeschaltet bzw. in ihrer Helligkeit geregelt werden.

Versorgt wird der Leistungskreis LK₁ über einen noch im Folgenden näher erläuterten als Tiefsetzsteller TS₁ ausgebildeten DC-DC-Wandler mit einer Versorgungsspannung U₁. Eingangsseitig des Tiefsetzstellers TS₁ ist eine Zwischenkreisspannung U₂ verfügbar. Die Zwischenkreisspannung U₂ wird durch einen als Hochsetzsteller HS₁ ausgebildeten DC-DC-Wandler aus einer Netzspannung U₀ erzeugt, die wiederum durch eine Spannungsversorgung, beispielsweise eine KFZ-Batterie mit 12 V, bereitgestellt wird. Die Zwischenkreisspannung U₂ liegt in diesem Ausführungsbeispiel etwa 6 V über der Versorgungsspannung U₁.

Zwei Signalwandler SW₁, SW₂ steuern mittels Bypass-Steuersignalen S₁, S₂ die steuerbaren Schaltelemente Q₁, Q₂. Die Signalwandler SW₁, SW₂ werden durch die Zwischenkreisspannung U₂ mit Energie versorgt. Der Signalwandler SW₁ wird durch ein Ansteuersignal A₁ und der Signalwandler SW₂ wird durch ein Ansteuersignal A₂ angesteuert. Die Signalwandler SW₁, SW₂ regulieren bzw. steuern über die Schaltelemente Q₁, Q₂ abhängig von den Ansteuersignalen A₁, A₂ die Halbleiterlichtquellen D₁, D₂ in ihrer Helligkeit bzw. schalten diese einzeln ein oder aus.

Die Signalwandler SW₁, SW₂ sind in diesem Ausführungsbeispiel gleichartig aufgebaut. Daher wird im Folgenden die Funktionsweise der Signalwandler SW₁, SW₂ anhand des Signalwandlers SW₁ näher erläutert.

Innerhalb des Signalwandlers SW₁ wird das Ansteuersignal A₁ zunächst auf einen Pegelumsetzer P₁ geführt. Der Pegelumsetzer P₁ wird dabei durch zwei aktive Halbleiterbauelemente, insbesondere zwei Bipolar-Transistoren Q₃, Q₄, sowie zwei Widerstände R₂, R₃ gebildet. Als Besonderheit ist zu erkennen, dass der Pegelumsetzer P₁ kollektorseitig des Transistors Q₃ anstelle eines reinen Pull-up-Widerstandes über ein Flankeneinstellmittel F₁ vorgespannt wird. Das Flankeneinstellmittel F₁ ist als RC-Glied ausgebildet und weist neben einem Widerstand R₁ einen zu diesem parallel geschalteten Kondensator C₁ auf. Einenends sind beide Bauelemente R₁, C₁ an die Zwischenkreisspannung U₂ angeschlossen. Das RC-Glied weist im gezeigten Ausführungsbeispiel eine Zeitkonstante von ca. 73 µs, d. h. mehr als 1 µs, auf.

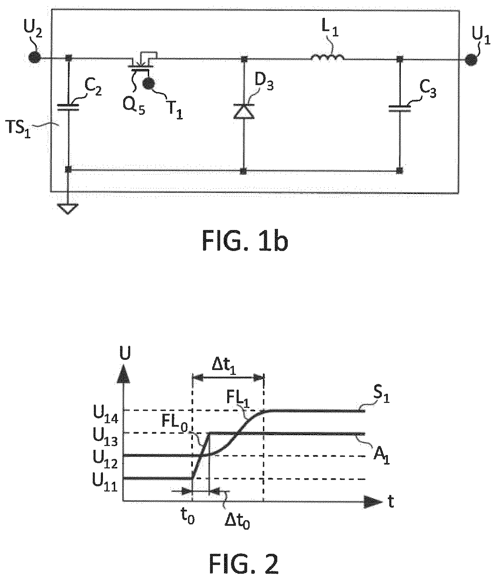

Der an die Zwischenkreisspannung U₂ angeschlossene Tiefsetzsteller TS₁ weist gemäß der Fig. 1b zwei Kondensatoren C₂, C₃, eine Diode D₃, eine Induktivität L₁ sowie einen MOS-FET-Transistor Q₅ auf. Der MOS-FET Q₅ wird dabei durch ein Taktsignal T₁ angesteuert. Somit ist der Tiefsetzsteller TS₁ als DC-DC-Wandler ausgebildet, der eine Versorgungsspannung U₁ bereitstellt, die geringer ist als die Zwischenkreisspannung U₂. Der Kondensator C₃ dient als Glättungskondensator.

Anhand der Fig. 2 wird nun die Funktionsweise des Signalwandlers SW₁ näher erläutert. Dazu zeigt die Fig. 2 schematisch den Zeitverlauf des Ansteuersignals A₁ sowie des hieraus durch den Signalwandler SW₁ abgeleiteten Bypass-Steuersignals S₁ während eines beispielhaft ausgewählten Zeitausschnitts, in dem das Ansteuersignal A₁ eine Flanke FL₀ aufweist.

Im dargestellten Zeitausschnitt wird das Ansteuersignals A₁ gemäß der Flanke FL₀ von einem Ausschalt-Pegel U₁₁ zu einem Einschalt-Pegel U₁₃ binnen der Flankendauer Δt₀ ab dem Zeitpunkt to umgeschaltet. Das von dem Signalwandler SW₁ erzeugte Bypass-Steuersignal S₁ wird dabei gemäß der Flanke FL₁ von einem Ausschalt-Pegel U₁₂ zu einem Einschalt-Pegel U₁₄ binnen der Flankendauer Δt₁ umgeschaltet.

Die Pegel U₁₂, U₁₄ liegen aufgrund des Pegelumsetzers P₁ in der gezeigten Darstellung höher als die korrespondierenden Pegel U₁₁, U₁₃ des Ansteuersignals A₁.

Die absoluten Pegel U₁₂, U₁₄ hängen davon ab, an welche der Halbleiterlichtquellen D₁, D₂ ein Pegelumsetzer angeschlossen ist und ob noch folgende Halbleiterlichtquellen leuchten oder überbrückt sind. Die Pegelumsetzer P₁, P₂ setzen ein digitales Ansteuersignal A₁, A₂, in ein Bypass-Steuersignal S₁, S₂, insbesondere einen Strom um. Der Strom bewirkt die zum Schalten der Schaltelemente Q₁, Q₂ benötigte Spannung.

Zu erkennen ist ferner, dass aufgrund der geringen Flankensteilheit der Flanke FL₁ die Flankendauer Δt₁ des Bypass-Steuersignals S₁ wesentlich länger ist als die Flankendauer Δt₀ des Ansteuersignals A₁. Die Flankensteilheit der Flanke FL₁ ist deutlich geringer als die Flankensteilheit der Flanke FL₀. Durch Wahl der Zeitkonstante des Flankeneinstellmittels F₁ kann die Flankensteilheit der Flanke FL₁, damit verbunden auch die Flankendauer Δt₁ und somit letztlich die Umschaltdauer des steuerbaren Schaltelements Q₁ gewählt werden. In diesem Ausführungsbeispiel ist dadurch die Umschaltdauer länger als eine vordefinierte Mindestumschaltdauer von 1 µs gewählt.

Hervorzuheben ist ferner, dass die Flanke FL₁ kontinuierlich verläuft, sodass das steuerbare Schaltelement Q₁ im dargestellten Zeitausschnitt stufenlos bzw. kontinuierlich von dem (gesperrten) Ausgangszustand in den (durchgeschalteten) Endzustand umschaltet.

Somit kann ein langsames, kontinuierliches Umschalten des steuerbaren Schaltelements Q₁ erreicht werden. Das steuerbare Schaltelement Q₁ wird somit langsam, insbesondere über eine Zeitdauer von mehreren µs, z. B. im Bereich 1 µs - 1 ms umgeschaltet. Stromspitzen im Leistungskreis LK₁ werden somit reduziert bzw. von vornherein vermieden. Belastungen der Halbleiterlichtquellen D₁, D₂ durch Stromspitzen werden vermieden und somit die Lebensdauer der Halbleiterlichtquellen D₁, D₂ verlängert. Zudem ist aufgrund der reduzierten Welligkeit der Versorgungsspannung U₁ die elektromagnetische Verträglichkeit der Schaltungsanordnung 1 verbessert.

## Patentansprüche

1. Schaltungsanordnung (1) einer Beleuchtungseinrichtung, vorzugsweise eines KFZ, mit wenigstens zwei in Reihe geschalteten Halbleiterlichtquellen (D₁, D₂), wobei wenigstens eine erste Halbleiterlichtquelle (D₁, D₂) durch eine zur ersten Halbleiterlichtquelle (D₁, D₂) parallel geschaltete Bypass-Schaltung (BP₁, BP₂) mit einem mittels eines Bypass-Steuersignals (S₁, S₂) steuerbaren Schaltelement (Q₁, Q₂) überbrückbar ist, wobei die erste Halbleiterlichtquelle (D₁, D₂) bei durchgeschaltetem Schaltelement (Q₁, Q₂) überbrückt ist, **gekennzeichnet durch** einen Signalwandler (SW₁, SW₂), der ein Ansteuersignal (A₁, A₂) in das Bypass-Steuersignal (S₁, S₂) umwandelt, wobei der Signalwandler (SW₁, SW₂) wenigstens ein Flankeneinstellmittel (F₁) zur Einstellung der Flankensteilheit einer Flanke (FL₁) des Bypass-Steuersignals (S₁, S₂) aufweist.

2. Schaltungsanordnung nach Anspruch 1, **dadurch gekennzeichnet, dass** das Flankeneinstellmittel (F₁) ein RC-Glied umfasst.

3. Schaltungsanordnung nach einem der vorhergehenden Ansprüche, **dadurch gekennzeichnet, dass** die Zeitkonstante des RC-Glieds mindestens 1 µs beträgt.

4. Schaltungsanordnung nach einem der vorhergehenden Ansprüche, **dadurch gekennzeichnet, dass** der Signalwandler (SW₁, SW₂) einen Pegelumsetzer (P₁), vorzugsweise zur Verschiebung des Ansteuersignals (A₁, A₂), aufweist.

5. Schaltungsanordnung nach einem der vorhergehenden Ansprüche, **dadurch gekennzeichnet, dass** der Pegelumsetzer (P₁) wenigstens ein aktives Halbleiterbauelement aufweist.

6. Schaltungsanordnung nach einem der vorhergehenden Ansprüche, **dadurch gekennzeichnet, dass** die in Reihe geschalteten Halbleiterlichtquellen (D₁, D₂) durch einen DC-DC-Wandler gespeist sind.

7. Schaltungsanordnung nach einem der vorhergehenden Ansprüche, **dadurch gekennzeichnet, dass** der DC-DC-Wandler als Tiefsetzsteller (TS₁) ausgebildet ist.

8. Schaltungsanordnung nach einem der vorhergehenden Ansprüche, **dadurch gekennzeichnet, dass** der Signalwandler (SW₁, SW₂) an eine Zwischenkreisspannung (U₂) angeschlossen ist und/oder dass der Signalwandler (SW₁, SW₂) eine Ladungspumpe aufweist.

9. Signalwandler (SW₁, SW₂) zur Ansteuerung eines steuerbaren Schaltelements (Q₁, Q₂) einer parallel zu einer Halbleiterlichtquelle (D₁, D₂) geschalteten Bypass-Schaltung (BP₁, BP₂) über ein Bypass-Steuersignal (S₁, S₂), **dadurch gekennzeichnet, dass** der Signalwandler (SW₁, SW₂) wenigstens ein Flankeneinstellmittel (FL₁), vorzugsweise ein RC-Glied umfassend, zur Einstellung der Flankensteilheit des Bypass-Steuersignals (S₁, S₂) aufweist.

10. Verfahren zur Ansteuerung eines steuerbaren Schaltelements (Q₁, Q₂) einer Bypass-Schaltung (BP₁, BP₂) zur Überbrückung einer Halbleiterlichtquelle (D₁, D₂), vorzugsweise einer Beleuchtungseinrichtung eines KFZ, **dadurch gekennzeichnet, dass** das steuerbare Schaltelement (Q₁, Q₂) über einen vorgegebenen Mindestzeitraum geschaltet wird.
